Europäisches Patentamt

European Patent Office

Office européen des brevets

(19)

(11) **EP 0 406 578 B2**

(12) **NEW EUROPEAN PATENT SPECIFICATION**

(45) Date of publication and mention
of the opposition decision:
**06.02.2002 Bulletin 2002/06**

(45) Mention of the grant of the patent:
**11.05.1994 Bulletin 1994/19**

(21) Application number: **90110799.5**

(22) Date of filing: **07.06.1990**

(51) Int Cl.$^7$: **C04B 35/10**

(54) **Process for making a sintered body of alumina and partially stabilized zirconia and method of preparing a powder for sintering.**

Verfahren zur Herstellung eines Sinterkörpers aus Aluminiumoxid und teilstabilisiertem Zirkoniumoxid und Herstellung eines Pulvers zur Sinterung.

Procédé de fabrication de corps fritté en alumine et zircone partiellement stabilisée et preparation d'une poudre pour frittage.

(84) Designated Contracting States:
**DE FR GB IT**

(30) Priority: **08.06.1989 JP 14610289**

(43) Date of publication of application:
**09.01.1991 Bulletin 1991/02**

(73) Proprietors:
• **AGENCY OF INDUSTRIAL SCIENCE AND TECHNOLOGY**
**Chiyoda-ku Tokyo (JP)**
• **NISSAN CHEMICAL INDUSTRIES LTD.**
**Chiyoda-ku Tokyo (JP)**

(72) Inventors:
• **Takagi, Hiroyoshi**
**Kasugai-shi, Aichi-ken (JP)**

• **Awano, Masanobu**
**Nagoya-shi, Aichi-ken (JP)**
• **Hoshi, Yuzi,**
**C/o Nissan Chemical Industries, Ltd.**
**Funabashi-shi, Chiba-ken (JP)**

(74) Representative:
**Hansen, Bernd, Dr. Dipl.-Chem. et al**
**Hoffmann Eitle, Patent- und Rechtsanwälte,**
**Postfach 81 04 20**
**81904 München (DE)**

(56) References cited:
**EP-A- 0 204 327       EP-A- 0 236 507**
**EP-A- 0 291 029       EP-A- 0 294 844**
**US-A- 4 218 253       US-A- 4 218 253**
**US-A- 4 316 964       US-C- 2 923 213**

EP 0 406 578 B2

**Description**

This invention relates to a a process for making sintered body of alumina and partially stabilized zirconia (hereeinafter referred to as " PSZ "), and a method of preparing a powder.

A ceramic material comprising particles of alumina as a matrix and PSZ dispersed therein is expected to be of great use as a structural material because of its high toughness, bending strength, hardness, and wear resistance. This material is mainly manufactured by vapor phase reaction, coprecipitation, or the wet mixing of powders in a ball mill.

The powder produced by vapor phase reaction or coprecipitation is, however, composed of particles which are so fine and active as to agglomerate easily, though it can be sintered at a temperature which is as low as from 1300°C to 1500°C. Moreover, both of vapor phase reaction and coprecipitation involve a complicated process and the product thereof is, therefore, expensive.

The wet mixing of powders is, on the other hand, a simple and inexpensive process. It, however, calls for a long time and, therefore, lacks efficiency. Moreover, the mixture requires a sintering temperature which is as high as from 1500°C to 1700°C. For example, Japanese Patent Application laid open under No. 190259/1984 states that a temperature of 1500°C to 1700°C is preferable for sintering a material comprising an alumina matrix and PSZ dispersed therein, and Japanese Patent Application laid open under No. 288157/1987 describes an example in which a temperature of 1600°C was employed.

No sintered product having a high bending strength has hitherto been obtained unless its sintering is carried out at elevated pressure. For example, Japanese Patent Application laid open under No. 6126/1986 discloses a sintered product of a powder prepared by a vapor phase reaction, but it has a bending strength of only 760 MPa (78 kg/mm$^2$). Japanese Patent Application laid open under No. 103859/1988 discloses a sintered product prepared from a mixture of alumina slurry and PSZ slurry but it has a bending strength of only 610 MPa (62 kg/mm$^2$). The sintered composite of alumina and PSZ appearing in the Daily Industrial News (Japanese newspaper) of December 6, 1989 has only a bending strength not exceeding 780 MPa (80 kg/mm$^2$).

A high-pressure sintering process using, for example, a HIP (hot isostatic press) or a hot press has hitherto been employed for making a densely sintered product having fine grain size and high strength. This process is, however, expensive. Moreover, it can hardly be used to make a product having a complicated shape.

There is not known any process that employs the wet mixing of powders and is, therefore, inexpensive, and yet can be carried out at a low temperature and normal pressure to make a sintered body of alumina and PSZ having high strength.

EP-A-0 236 507 A1 reveals a process for the production of a high density alumina-zirconia ceramic body which is prepared from a formulation comprising alumina, zirconia and transitional metal oxides.

EP-A-0 204 327 A2 discloses a process for the preparation of mixed oxides of alumina and zirconia starting from aqueous solutions comprising an aluminum salt and a zirconium salt and by carrying out the precipitation in the presence of cationic polyelectrolytes. With the above process amorphous mixed oxides of alumina and zirconia are prepared.

It is an object of this invention to provide a process which can be carried out at a low temperature and normal pressure to make a sintered body of alumina and PSZ having high strength at a low cost.

It is another object of this invention to provide a method which can prepare at a low cost a powder for sintering which can be sintered at a low temperature and normal pressure to make a sintered body of alumina and PSZ having high strength.

We, the inventors of this invention, have found it essential to use a finely and uniformly divided powder having high purity in order to make a sintered ceramic body having high strength. An abnormal grain growth is likely to occur in the sintering of a powder having a great variation in its particle size distribution. An abnormal grain growth is also likely to occur in a powder containing a large amount of impurities as a result of the formation of an amorphous phase at the grain boundary, or a liquid phase during its sintering. In either event, the abnormal rain growth results in a sintered product having low strength.

According to a first aspect of this invention, there is provided a process for making a sintered body of alumina and PSZ which comprises preparing a wet mixture of a finely divided alumina powder of at least 99.95% purity having a primary particle diameter not exceeding 0.15 micron and an average particle diameter not exceeding 0.3 micron, and 10 to 50% by volume of a partially stabilized zirconia powder of at least 99.95% purity having an average particle diameter not exceeding 0.3 micron, molding the mixed powder, and sintering the molded product at a temperature of 1300 - 1500°C at atmospheric pressure.

According to a second aspect of this invention, there is provided a method of preparing a sintering powder by the wet mixing of alumina and PSZ powders which comprises using a finely divided alumina powder of at least 99.95% purity having a primary particle diameter not exceeding 0.15 micron and an average particle diameter not exceeding 0.3 micron, and 10 to 50% by volume of a PSZ powder of at least 99.95% purity having an average particle diameter not exceeding 0.3 micron.

These and other features and advantages of this invention will become more apparent from the following description and the accompanying drawing.

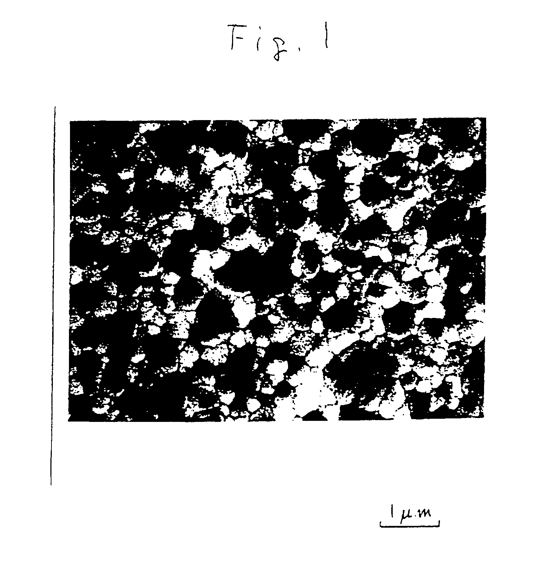

FIGURE 1 is a photograph taken through a scanning electron microscope and showing at a magnification of 20,000 the microstructure of a sintered body of alumina and PSZ as obtained in EXAMPLE 7 of this invention which will hereinafter be described.

According to a salient feature of this invention, a powder for sintering is prepared by using a finely divided alumina powder having a primary particle diameter not exceeding 0.15 micron and an average particle diameter not exceeding 0.3 micron, and a purity of at least 99.95%, and a PSZ powder having an average particle diameter not exceeding 0.3 micron, and a purity of at least 99.95 %. The fine PSZ powder having a purity of at least 99.95 % contains only less than 0.05 % of impurities other than a partial stabilizer and hafnia. Although any PSZ of the type known in the art may be used for the purpose of this invention, it is preferable to use one containing 0.5 to 5 %, and more preferably 2 to 3.5 %, of yttria on a mol percent basis.

The mixed powder of alumina and PSZ can be prepared by an ordinary wet mixing method using water, or an organic solvent such as alcohol. Although any known type of mixer can be used, it is preferable to use an attrition mill (e.g., an Attritor made by Mitsui Miike Kakoki, a Japanese company), as it can form a uniform mixture in a short time. The use of a ball and a vessel which are both made of high-purity alumina or PSZ is strongly recommended to prevent the inclusion of impurities in the mixed powder. No long time of mixing is necessary. If an attrition mill is used, it is sufficient to continue mixing for a period of three to 30 hours, depending on the concentration of the powders in the solvent and the rotating speed of the mill. Too long a time of mixing must be avoided, as the particles are so finely divided as to agglomerate again.

The proportions of alumina and PSZ in the mixed powder depend on the sintered product which is to be manufactured. The proportion of PSZ is in the range of 10 to 50% by volume in accordance with the invention. A mixed powder containing a higher proportion of alumina yields a sintered body having a higher hardness.

The proportion by volume of PSZ as hereinabove stated has been determined on the premises that PSZ has a density of 6 g/cm$^3$, while alumina has a density of 4 g/cm$^3$. Therefore, a mixed powder containing, for example, 40% by volume of PSZ is one containing 50% by weight of PSZ. The proportions by volume of alumina and zirconia in a sintered product are substantially equal to their proportions in the mixed powder.

The wet mixing of alumina and PSZ powders gives a slurry of their mixture. A mixed powder is obtained if the slurry is dried by an ordinary method, for example, by heating to a temperature in the vicinity of the boiling point of the solvent.

The dry powder can be used to make a sintered body of alumina and PSZ by employing a process including the usual steps of granulation, molding and sintering. The powder is sintered at normal pressure, i.e. without any positive application of pressure, as it consists of finely and uniformly divided particles. It is sintered at a temperature of 1300°C to 1500°C. The use of any temperature exceeding 1500°C is undesirable, as it causes the grain growth of alumina resulting in a sintered product of low strength.

The sintered body of alumina and PSZ prepared according to this invention is a fine-grained product of high density having an average grain size not exceeding 0.7 µm. It has a bulk density of at least 98 % of theoretical density , a Vickers hardness of at least 14700 MPa (1500 kg/mm$^2$), and a bending strength of at least 980 MPa (100 kg/mm$^2$).

The average grain size of the sintered body was determined by polishing a surface of the body to give it a mirror finish, etching the polished surface, examining the etched surface through a scanning electron microscope, and making the following calculation:

$$r = 1.5L$$

where r is the average grain size and L is the average length of at least 50 grains lying across a line drawn arbitrarily on the examined surface.

The invention will now be described in further detail with reference to several specific examples.

EXAMPLE 1

An attritor was charged with a finely and uniformly divided alumina powder having a primary particle diameter of 0.1 µm measured by SEM, an average particle diameter of 0.2 µm by sedimentation method and a purity of 99.99 % (product of Taimei Chemical Co. Ltd.) and a PSZ powder having an average particle diameter of 0.2 µm and a purity of 99.98 % and containing 3 % of yttrial on a mol percent basis (product of Nissan Chemical Industries, Ltd.), the proportion of the PSZ being 40 % by volume. The balls in the attritor had a diameter of 3 mm and were made of high-purity PSZ. Ethanol was used as a dispersion medium and the powders were mixed together for three hours to form a slurry containing 40 % by weight of their mixture. After it had been dried, the mixed powder was molded isostatically at a pressure of 255 MPa (2.6 tons/cm$^2$) and the molded product was sintered at a temperature of 1450°C and normal pressure for two hours in the air.

The sintered product was examined for bulk density, three-point bending strength and Vickers hardness. Its bulk density was determined by Archimedes' method. Its three -point bending strength was determined in accordance with the JIS R-1601-1981 method. Its Vickers hardness was determined by polishing a specimen after its bending test to a mirror finish with a diamond paste, and applying a load of 1 kg to it. It showed a bulk density of 4.78 g/cm$^3$ , and average three-point bending strength of 1010 MPa (103 kg/mm$^2$) with a maximum of 1128 MPa (115 kg/mm$^2$), and a Vickers hardness of 15500 MPa (1577 kg/mm$^2$).

EXAMPLES 2 TO 9

Sintered products were made by using different proportions of alumina and PSZ powders, PSZ powders having different compositions, and different mixing conditions, as shown in TABLE 1, but otherwise repeating EXAMPLE 1. The procedures of EXAMPLE 1 were followed for determining the bulk density, three-point bending strength and Vickers hardness of each product. The results are shown in TABLE 1, and confirm the high strength and hardness of the sintered products according to this invention.

The microstructure of the product of EXAMPLE 7 was examined through a scanning electron microscope. FIGURE 1 is a photograph showing it at a magnification of 20,000. Black grains are of alumina, and white ones of PSZ.

Table 1

| | Composition of mixed powder, vol.% | | Composition of ZrO$_2$ powder, mol% | | Mixing time, h | Bulk density, g/cm$^3$ | Average grain size µm | Bending strength, MPa (kg/mm$^2$) | | Vickers hardness, GPa (kg/mm$^2$) |
|---|---|---|---|---|---|---|---|---|---|---|
| | Al$_2$O$_3$ | ZrO$_2$ | Y$_2$O$_3$ | ZrO$_2$ | | | | Average | Maximum | |
| Example 1 | 60 | 40 | 3.0 | 97.0 | 3 | 4.79 | 0.40 | 1010 (103) | 1128 (115) | 15.5 (1577) |
| Example 2 | 80 | 20 | 3.0 | ·97.0 | 3 | 4.38 | 0.45 | 873 (89) | 1030 (105) | 17.2 (1750) |
| Example 3 | 70 | 30 | 3.0 | 97.0 | 3 | 4.60 | 0.45 | 853 (87) | 1000 (102) | 16.1 (1640) |
| Example 4 | 50 | 50 | 3.0 | 97.0 | 3 | 5.00 | 0.40 | 912 (93) | 1039 (106) | 15.1 (1540) |
| Example 5 | 80 | 20 | 2.5 | 97.5 | 3 | 4.35 | 0.50 | 951 (97) | 1010 (103) | 17.2 (1754) |
| Example 6 | 70 | 30 | 2.5 | 97.5 | 3 | 4.60 | 0.50 | 1098 (112) | 1177 (120) | 16.6 (1692) |
| Example 7 | 60 | 40 | 2.5 | 97.5 | 3 | 4.70 | 0.45 | 1049 (107) | 1137 (116) | 15.8 (1608) |
| Example 8 | 50 | 50 | 2.5 | 97.5 | 3 | 5.00 | 0.40 | 1030 (105) | 1177 (120) | 15.3 (1556) |
| Example 9 | 60 | 40 | 3.0 | 97.0 | 30 | 4.79 | 0.40 | 1039 (106) | 1216 (124) | 15.4 (1570) |

EP 0 406 578 B2

## EP 0 406 578 B2

**Claims**

1. A method of preparing a powder for sintering at a temperature of 1300 to 1500°C at atmospheric pressure by wet mixing of alumina and partially stabilized zirconia powders, **characterized in that** a finely and uniformly divided alumina powder of at least 99.95% purity having a primary particle diameter not exceeding 0.15 μm and an average particle diameter not exceeding 0.3 μm is mixed with 10-50% by volume of a partially stabilized zirconia powder of at least 99.95% purity having an average particle diameter not exceeding 0.3 μm.

2. A method according to claim 1, **characterized in that** the partially stabilized zirconia powder contains 0.5 to 5% of yttria on a mol percent basis.

3. A process for making a sintered body of alumina and partially stabilized zirconia including the steps of preparing a powder for sintering by the wet mixing of alumina and partially stabilized zirconia powders, granulating said powders, molding the granulated product and sintering the molded product, **characterized in that** said powder for sintering is prepared by mixing a finely and uniformly divided alumina powder of at least 99.95% purity having a primary particle diameter not exceeding 0.15 μm and an average particle diameter not exceeding 0.3 μm and 10-50% by volume of partially stabilized zirconia powder of at least 99.95% purity having an average particle diameter not exceeding 0.3 μm, and **in that** said sintering is carried out by heating at a temperature of 1300-1500°C at atmospheric pressure.

4. A process as claimed in claim 3, **characterized in that** said partially stabilized zirconia powder contains 0.5 to 5% of yttria on a mol percent basis.

**Patentansprüche**

1. Verfahren zur Herstellung eines Pulvers zum Sintern bei einer Temperatur von 1300°C bis 1500°C bei atmosphärischem Druck durch Nassmischen von Aluminiumoxid- und teilweise stabilisiertem Zirkoniumoxid-Pulver, **dadurch gekennzeichnet, dass** ein fein und gleichmässig verteiltes Aluminiumoxid-Pulver mit einer Reinheit von mindestens 99,95 %, einem primären Partikeldurchmesser von nicht mehr als 0,15 μm und einem durchschnittlichen Partikeldurchmesser von nicht mehr als 0,3 μm mit 10 bis 50 Vol.% eines teilweise stabilisierten Zirkoniumoxid-Pulvers mit einer Reinheit von mindestens 99,95 % und einem durchschnittlichen Partikeldurchmesser von nicht mehr als 0,3 μm gemischt wird.

2. Verfahren gemäss Anspruch 1, **dadurch gekennzeichnet, dass** das teilweise stabilisierte Zirkoniumoxid-Pulver 0,5 bis 5 % Yttriumoxid auf Mol.%-Basis enthält.

3. Verfahren zur Herstellung eines gesinterten Körpers aus Aluminiumoxid und teilweise stabilisiertem Zirkoniumoxid, das die Schritte der Herstellung eines Pulvers zum Sintern durch das Nassmischen von Aluminiumoxid- und teilweise stabilisierten Zirkoniumoxid-Pulvern, Granulieren dieser Pulver, Formung des granulierten Produkts und Sintern des Formprodukts einschliesst, **dadurch gekennzeichnet, dass** das Pulver zum Sintern hergestellt wird, indem man ein fein und gleichmässig verteiltes Aluminiumoxid-Pulver mit einer Reinheit von mindestens 99,95 %, einem primären Partikeldurchmesser von nicht mehr als 0,15 μm und einem durchschnittlichen Partikeldurchmesser von nicht mehr als 0,3 μm und 10 bis 50 Vol.% eines teilweise stabilisierten Zirkoniumoxid-Pulvers mit einer Reinheit von mindestens 99,95 % und einem durchschnittlichen Partikeldurchmesser von nicht mehr als 0,3 μm mischt und das Sintern durch Erhitzen auf eine Temperatur von 1300 bis 1500°C bei Atmosphärendruck ausgeführt wird.

4. Verfahren gemäss Anspruch 3, **dadurch gekennzeichnet, dass** das teilweise stabilisierte Zirkoniumoxid-Pulver 0,5 bis 5 % Yttriumoxid auf Mol.%-Basis enthält.

**Revendications**

1. Procédé de préparation d'une poudre à fritter à une température de 1300 à 1500°C sous la pression atmosphérique par mélange humide de poudres d'alumine et de zircone partiellement stabilisée, **caractérisé en ce que** l'on mélange une poudre d'alumine finement et uniformément divisée d'une pureté d'au moins 99,95 % ayant un diamètre de particules primaires de pas plus de 0,15 μm et un diamètre moyen de particules de pas plus 0,3 μm avec

10 à 50 % en volume d'une poudre de zircone partiellement stabilisée d'une pureté d'au moins 99,95 % ayant un diamètre moyen de particules de pas plus de 0,3 μm.

2. Procédé selon la revendication 1, **caractérisé en ce que** la poudre de zircone partiellement stabilisée contient 0,5 à 5 mol % d'oxyde d'yttrium.

3. Procédé pour fabriquer un corps fritté d'alumine et de zircone partiellement stabilisée comprenant les étapes de préparation d'une poudre frittée par le mélange humide de poudres d'alumine et de zircone partiellement stabilisée, de granulation desdites poudres, de moulage du produit granulé et de frittage du produit moulé, **caractérisé en ce que** ladite poudre à fritter est préparée en mélangeant une poudre d'alumine finement et uniformément divisée d'une pureté d'au moins 99,95 % ayant un diamètre de particules primaires de pas plus 0,15 μm et un diamètre moyen de particules de pas plus de 0,3 μm et 10 à 50 % en volume d'une poudre de zircone partiellement stabilisée d'une pureté d'au moins 99,95 % ayant un diamètre moyen de particules de pas plus de 0,3 μm et **en ce que** ledit frittage est mis en oeuvre par chauffage à une température de 1 300-1 500°C à la pression atmosphérique.

4. Procédé selon la revendication 3, **caractérisé en ce que** ladite poudre de zircone partiellement stabilisée contient de 0,5 à 5 mol % d'oxyde d'yttrium.

Fig. 1

1 μ·m